(19) Europäisches Patentamt
European Patent Office
Office européen des brevets

(11) **EP 2 204 386 B1**

(12) **EUROPEAN PATENT SPECIFICATION**

(45) Date of publication and mention of the grant of the patent:
**31.08.2016 Bulletin 2016/35**

(21) Application number: **08843293.5**

(22) Date of filing: **21.10.2008**

(51) Int Cl.:
***C08B 11/08** (2006.01)*
***C08B 11/145** (2006.01)*
***C08B 1/06** (2006.01)*
***C08B 11/14** (2006.01)*

(86) International application number:
**PCT/JP2008/069036**

(87) International publication number:
**WO 2009/054373 (30.04.2009 Gazette 2009/18)**

# (54) METHOD FOR PRODUCING CELLULOSE ETHER DERIVATIVE

VERFAHREN ZUR HERSTELLUNG EINES CELLULOSEETHERDERIVATS

PROCÉDÉ DE FABRICATION D'UN DÉRIVÉ D'ÉTHER DE CELLULOSE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority:
**25.10.2007 JP 2007278052**
**08.11.2007 JP 2007290758**
**12.12.2007 JP 2007320663**
**26.12.2007 JP 2007334160**

(43) Date of publication of application:
**07.07.2010 Bulletin 2010/27**

(73) Proprietor: **Kao Corporation**
**Chuo-Ku**
**Tokyo 103-8210 (JP)**

(72) Inventors:
- **OKUTSU, Munehisa**
  **Wakayama-shi**
  **Wakayama 640-8580 (JP)**
- **TAKAI, Masanori**
  **Wakayama-shi**
  **Wakayama 640-8580 (JP)**
- **NISHIOKA, Toru**
  **Wakayama-shi**
  **Wakayama 640-8580 (JP)**
- **IHARA, Takeshi**
  **Wakayama-shi**
  **Wakayama 640-8580 (JP)**
- **NOJIRI, Naoki**
  **Wakayama-shi**
  **Wakayama 640-8580 (JP)**
- **UMEHARA, Masahiro**
  **Wakayama-shi**
  **Wakayama 640-8580 (JP)**
- **NAKANISHI, Kohei**
  **Wakayama-shi**
  **Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**JP-A- 60 020 901**
**JP-A- 61 241 337**
**JP-A- 62 236 801**
**JP-A- 2001 086 957**
**JP-T- 2000 513 042**
**JP-T- 2002 512 271**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 204 386 B1

## Description

FIELD OF THE INVENTION

The present invention relates to a process for producing cellulose ether derivatives.

BACKGROUND OF THE INVENTION

Cellulose ether derivatives have been used in a variety of applications. For example, hydroxyethyl cellulose has been used as compounded components such as dispersants and stabilizers for paints, cosmetics, building materials, thickeners, adhesives, drugs, etc., or as a starting material of the other cellulose ether derivatives. Also, hydroxypropyl cellulose has been used as an additive for medical preparations or in coating agent compositions, etc.

In addition, cationic cellulose ether derivatives such as cationized hydroxyalkyl celluloses have been used as components to be compounded in various cleaning agent compositions such as shampoos, rinses, treatments and conditioners, as well as dispersants, modifiers and aggregating agents.

As the method for production of the cellulose ether derivatives such as typically hydroxyethyl cellulose, there has been reported the method in which an epoxy compound such as ethyleneoxide is used as an etherifying agent (for example, refer to Patent Documents 1 and 2). In general, in the production method, the etherifying agent is not directly reacted with the cellulose, but it is required to first subject the cellulose to activation treatments such as so-called cellulose alkalization (conversion of cellulose into alkali cellulose) and mercerization in which the cellulose is mixed with a large amount of water and an excessive amount of an alkali metal hydroxide such as sodium hydroxide in a slurry condition to produce an alkali cellulose, and then the thus activated cellulose is reacted with the etherifying agent to obtain a cellulose ether.

In the cellulose alkalization step, the resulting alkali cellulose is subjected to filtration or squeezing to remove surplus alkali or water therefrom. However, even after subjected to filtration or squeezing, the alkali cellulose usually still contains residual water in an amount equal to or more than the amount of the alkali cellulose. Further, it is considered that when subjected to the cellulose alkalization, a majority of hydroxyl groups contained in a molecule of cellulose are converted into an alcoholate in the resulting alkali cellulose. In fact, the alkali cellulose contains an alkali in an amount of usually from about 1 to about 3 mol, at least 1 mol, per a glucose unit in a molecule of the cellulose.

When adding ethyleneoxide to the alkali cellulose thus obtained by the cellulose alkalization, the residual water that still remains therein in an amount equal to or more than the amount of the alkali cellulose after the cellulose alkalization is reacted (hydrated) with ethyleneoxide, so that a large amount of by-products such as ethylene glycol are produced.

In addition, since the reaction with ethyleneoxide is usually carried out in a slurry condition, not only water but also various polar solvents may be added to the reaction system to effectively conduct the slurry reaction. For example, in the above Patent Documents 1 and 2, there is described the method of adding a polar solvent that is hardly compatible with water such as tert-butanol and methyl isobutyl ketone to the reaction system and then separating and recovering the solvent from a water phase after the reaction. However, unless any measure for considerably reducing the amounts of the alkali and residual water is taken, it is substantially difficult to prevent production of a large amount of the neutralized salts and reduce the amounts of the by-products such as ethylene glycol to a large extent.

The hydroxypropyl cellulose is generally obtained by a slurry method using a large amount of a solvent in which the alkali cellulose is reacted with propyleneoxide as an etherifying agent (for example, refer to Patent Documents 3 to 6). For example, in Patent Document 3, there is described the method using as the solvent, a mixed solvent containing a hydrocarbon solvent such as benzene, toluene, xylene, hexane and heptane, and a polar solvent such as isopropanol and tert-butanol. In Patent Document 4, there is described the method using a hydrophilic polar solvent such as isopropanol, tert-butanol, acetone, tetrahydrofuran and dioxane. In Patent Document 5, there is disclosed the method using an aliphatic ketone having 6 to 10 carbon atoms such as methyl isobutyl ketone. In Patent Document 6, there is disclosed the method using an aliphatic ketone, a lower alcohol and a (poly)ethylene glycol dialkyl ether such as ethylene glycol dimethyl ether and diethylene glycol dimethyl ether. However, in any of these conventional methods, owing to need of using an alkali cellulose therein, it may be difficult to prevent production of by-products such as propylene glycol, and there also tends to occur the same problem as described above that additional procedures for removal of a large amount of the neutralized salts derived from an excessive amount of alkali used in the cellulose alkalization must be conducted after the reaction.

On the other hand, there has been proposed the liquid phase reaction method in which a glycidyl group exhibiting a higher hydrophilicity than that of a hydroxyethyl group is introduced as a substituent group in the cellulose ether derivative, more specifically, glycidol is used as a hydrophilic etherifying agent in place of ethyleneoxide (for example, refer to Non-Patent Document 1 and Patent Document 7). In Non-Patent Document 1, there is disclosed a homogeneous reaction method in which glycidol is added to cellulose by using dimethyl acetamide containing lithium chloride as a solvent and further adding a base catalyst to the reaction system. However, in the reaction method, it is required to

subject the cellulose to pretreatments such as dehydration for dissolving the cellulose in the solvent, and there also occur the problems such as poor efficiency of the reaction for adding glycidol to the cellulose.

In Patent Document 7, there is also disclosed a homogeneous reaction method in which glycidol is added to cellulose by using dimethyl acetamide containing a quaternary ammonium halide such as tetrabutyl ammonium fluoride and further adding a base catalyst to the reaction system. However, the quaternary ammonium halide used in the reaction method is very expensive, and the method has many industrial problems such as poor productivity since a large amount of the solvent is needed owing to low solubility of the cellulose therein, similarly to the above conventional methods.

Also, the cationized hydroxyalkyl celluloses, in particular, cationized hydroxyethyl celluloses, have been generally produced not by the method in which cellulose is directly cationized, but by the method in which cellulose is first reacted with an etherifying agent such as ethyleneoxide to form a cellulose ether and then the resulting cellulose ether is reacted with a cationizing agent such as glycidyl trialkyl ammonium chloride. In this method, since the cellulose alkalization must be carried out upon production of the cellulose ether, it may be difficult to suppress formation of by-products such as ethylene glycol, and there also occurs such a problem that a large amount of the neutralized salts derived from an excessive amount of alkali used in the cellulose alkalization must be removed after the reaction, similarly to the above conventional methods.

On the other hand, as the method for producing a cationic cellulose ether derivative in which a cationizing agent is directly reacted with cellulose without via formation of a cellulose ether, for example, Patent Document 8 discloses the method in which the reaction of cellulose with a cationizing agent is carried out by using dimethyl acetamide containing lithium chloride as a solvent and further adding an amine or a tertiary alcoholate catalyst to the reaction system. However, in this method, it is required not only to carefully control a water content in the dimethyl acetamide solvent, but also to use the solvent in a very large amount, at least 10 times the mass of the cellulose used, owing to poor solubility of the cellulose therein, and further to use lithium chloride as an additive of the solvent in an amount as large as almost equal to the amount of the cellulose used. Therefore, the above method has a large industrial burden similarly to the above conventional methods.

Accordingly, from the industrial viewpoints, it is very useful to develop a process for producing a cellulose ether derivative in a convenient and efficient manner with a less amount of wastes, in particular, to develop a efficient production process using a catalytic reaction.

Patent Document 1: JP 8-245701A
Patent Document 2: JP 6-199902A
Patent Document 3: JP 45-4754B
Patent Document 4: JP 60-9521B
Patent Document 5: JP 11-21301A
Patent Document 6: JP 2000-186101A
Patent Document 7: JP 2007-238656A
Patent Document 6: JP 60-177002A

Non-Patent Document 1: Makromol. Chem., 193(3), 647 (1992)

US 6392035 B1 to reactive cellulose, i.e. cellulose having a very low degree of crystallinity, and to a method for producing the cellulose. The reactive cellulose is used as raw material for making cellulose ethers.

WO 9954361 A1 relates to a method for activating and derivatizing cellulose and to the cellulose derivatives obtained thereby. The method involves the steps of dissolving cellulose in an aqueous tertiary amine oxide and coagulation of the dissolved cellulose through addition of a precipitating agent.

US 4477657 A relates to a process for preparing hydroxyalkylcellulose ethers which comprises the steps of (a) forming a reaction mass comprising cellulose and an amount of an alkali metal hydroxide at least sufficient to break up the crystallinity of the cellulose and to catalyze the reaction between cellulose and an alkylene oxide and (b) continuously adding a C3 or higher alkylene oxide and an etherifying agent other than an alkylene oxide to the reaction mass under conditions including an elevated temperature such that the alkylene oxide and the etherifying agent react with the cellulose to attach ether groups thereto.

## SUMMARY OF THE INVENTION

The present invention relates to a process for producing a cellulose ether derivative comprising producing low-crystaline powdery cellulose having a crystallinity of 50% or less by coarsely crushing sheet-like to obtain chip-like pulps and treating the chip-like pulps by an extruder and further by a ball mill, as well as the step of reacting the low-crystalline powdery cellulose with an epoxy compound in the presence of a catalyst.

BRIEF DESCRIPTION OF THE DRAWINGS

FIGS. 1(a) and 1(b) are schematic views showing an entire portion of a kneader-type reactor in which FIG. 1(a) is a front view of the reactor, and FIG. 1(b) is a right side view of the reactor.

FIG. 2 is a schematic view showing a kneader-type reactor used in Examples 3 to 5. Although the reactor shown in FIG. 2 is a batch-type reactor, a continuous type reactor capable of withdrawing a reaction product through a discharge port 8 may also be used in the present invention.

Explanation of Reference Numerals

1: Reactor; 2: Supporting portion of reactor; 3: Angle-controlling section of reactor; 4: Agitation blade; 5: Drive axis of agitation blade; 6: Feed port for raw materials; 7: Feed port for ethyleneoxide; 8: Discharge port for ethyleneoxide; 9: Inlet port for heating medium; 10 Outlet port for heating medium; 11: Motor

DETAILED DESCRIPTION OF THE INVENTION

The present invention relates to a process for producing a cellulose ether derivative in an industrially convenient and efficient manner. The present inventors have found that the reaction between cellulose and an epoxy compound proceeds efficiently and selectively in the presence of a catalyst without subjecting the cellulose to any activation treatment such as cellulose alkalization.

More specifically, the present invention relates to a process for producing a cellulose ether derivative by producing low-crystalline powdery cellulose having a crystallinity of 50% or less by coarsely crushing sheet-like pulps to obtain chip-like pulps, and treating the chip-like pulps by an extruder and further by a ball mill, followed by reacting the low-crystalline powdery cellulose with an epoxy compound in the presence of a catalystwhich includes.

The present invention provides a process for producing a cellulose ether derivative in an industrially convenient and efficient manner in which the amounts of by-products such as neutralized salts are considerably reduced.

[Production of Low-Crystalline Powdery Cellulose]

It is generally known that celluloses have several crystal structures whose crystallinity is defined by the ratio between an amorphous moiety partially existing therein and a crystalline moiety. The term "crystallinity" as used herein means a crystallinity of cellulose I derived from a crystal structure of natural celluloses, and is defined as the crystallinity represented by the following calculation formula (I) obtained from powder X-ray crystal diffraction spectrum analysis:

$$\text{Crystallinity (\%)} = [(I_{22.6} - I_{18.5}/I_{22.6}] \times 100 \qquad \text{(I)}$$

wherein $I_{22.6}$ is a diffraction intensity of a lattice plane ((002) plane) as measured at a diffraction angle 2θ of 22.6° in X-ray diffraction analysis; and $I_{18.5}$ is a diffraction intensity of an amorphous moiety as measured at a diffraction angle 2θ of 18.5° in X-ray diffraction analysis.

The term "low-crystalline" of the low-crystalline powdery cellulose as used in the present invention means the condition in which the proportion of the amorphous moiety in a crystal structure of the cellulose is large, and includes the case where the crystallinity calculated from the above formula (I) is 0%. The crystallinity calculated from the above formula (I) is not more than 50% and not less than 0%.

Generally known powdery celluloses contain an amorphous moiety in a very small amount, and the crystallinity thereof as calculated from the above formula (I) generally lies within the range of from about 60 to about 80%. These celluloses are classified into so-called crystalline celluloses and exhibit an extremely low chemical reactivity for synthesis of cellulose ether derivatives such as hydroxyethyl cellulose.

The low-crystalline powdery cellulose used in the present invention can be readily produced from sheet-like or roll-like pulps having a high cellulose purity as generally available raw materials.

The low-crystalline powdery cellulose is produced, by a method in which chip-like pulps obtained by coarsely crushing sheet-like pulps are treated by an extruder and further by a ball mill.

The extruder used in the above method may be either a single-screw or twin-screw extruder and may be

equipped with so-called kneading disks in any of screws thereof for the purpose of applying a strong compression shear force to the pulps. The method of treating the pulps by the extruder is not particularly limited. The chip-like pulps are preferably continuously charged into the extruder and treated therein.

Examples of the ball mill used in the above method include known ball mills such as a vibrating ball mill, a medium-stirring mill, a rotating ball mill and a planetary ball mill. The material of balls used as a milling medium in these ball mills is not particularly limited. Examples of the material of balls include iron, stainless steel, alumina and zirconia. The outer diameter of the respective balls is preferably from 0.1 to 100 mm from the viewpoint of efficient amorphization of the cellulose. The shape of the milling medium used in the ball mills is not particularly limited to a ball shape, but may also be a rod shape or a tubular shape.

The treating time of the pulps in the ball mills is preferably from 5 min to 72 h to efficiently reduce a crystallinity of the resulting cellulose. The ball mill treatment of the pulps is carried out at a temperature of 250°C or lower and preferably from 5 to 200°C to minimize degradation or deterioration of the resulting cellulose due to heat generated upon the treatment. If required, the ball mill treatment is preferably conducted in an atmosphere of an inert gas such as nitrogen.

According to the above method, it is also possible to control a molecular weight of the resulting cellulose. More specifically, by using the above method, it is also possible to readily produce a powdery cellulose having a high polymerization degree and a low crystallinity which is, in general, hardly available. The polymerization degree of the low-crystalline powdery cellulose is preferably from 100 to 2000 and more preferably from 100 to 1000.

The crystallinity of the low-crystalline powdery cellulose used in the present invention as calculated from the above calculation formula (I) is-50% or less. When the crystallinity of the low-crystalline powdery cellulose is 50% or less, the addition reaction of the epoxy compound to the cellulose can proceed very smoothly. From this viewpoint, the crystallinity of the low-crystalline powdery cellulose is more preferably 40% or less and still more preferably 30% or less. In particular, in the present invention, completely amorphized celluloses, i.e., so-called non-crystalline celluloses having a crystallinity of substantially 0% as calculated from the above calculation formula (I), are most preferably used.

The average particle size of the low-crystalline powdery cellulose is not particularly limited as long as a good fluidity of the powdery cellulose can be ensured, and is preferably 300 μm or less, more preferably 150 μm or less and still more preferably 50 μm or less. However, from the viewpoint of easiness in handling upon industrial practice, the average particle size of the low-crystalline powdery cellulose is preferably 20 μm or more, and more preferably 25 μm or more.

[Production of Cellulose Ether Derivative]

In the present invention, the low-crystalline powdery cellulose is reacted with an epoxy compound in the presence of a catalyst to obtain a cellulose ether derivative.

The epoxy compound used in the present invention is preferably one compound selected from the group consisting of a glycidyl trialkyl ammonium salt represented by the following formula (1), glycidol, ethyleneoxide and propyleneoxide.

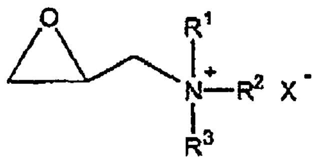 (1)

wherein $R^1$ to $R^3$ are respectively a hydrocarbon group having 1 to 4 carbon atoms and may be the same or different; and X is a halogen atom.

Meanwhile, in the present invention, the embodiment in which the glycidyl trialkyl ammonium salt represented by the above formula (1) is used as the epoxy compound, the embodiment in which glycidol is used as the epoxy compound, the embodiment in which ethyleneoxide is used as the epoxy compound, and the embodiment in which propyleneoxide is used as the epoxy compound, are occasionally referred to as a "first embodiment of the present invention", a "second embodiment of the present invention", a "third embodiment of the present invention" and a "forth embodiment of the present invention", respectively.

The catalyst used in the present invention is not particularly limited, and may be either a base catalyst or an acid catalyst. Examples of the base catalyst include alkali metal hydroxides such as sodium hydroxide, potassium hydroxide and lithium hydroxide, alkali earth metal hydroxides such as magnesium hydroxide and calcium hydroxide, and tertiary amines such as trimethylamine, triethylamine and triethylene diamine. Examples of the acid catalyst include Lewis acid catalysts such as lanthanide triflates. Among these catalysts, preferred are base catalysts, in particular, alkali metal hydroxides, and more preferred are sodium hydroxide and potassium hydroxide. These catalysts may be used

alone or in combination of any two or more thereof.

In the present invention, since the reaction proceeds in a catalytic manner, the catalyst may be used in the reaction in a so-called catalytic amount capable of exhibiting a sufficient catalytic effect on the cellulose and epoxy compound. More specifically, the catalyst is preferably used in an amount corresponding to from 0.1 to 50 mol% on the basis of a glucose unit in a molecule of the cellulose (from 0.001 to 0.5 mol per 1 mol of the glucose unit).

In the present invention, the reaction between the low-crystalline powdery cellulose and the epoxy compound is preferably carried out in the condition in which the reactants are fully dispersed in a fluidizable powder oondition without forming a swellable slurry, a high-viscous liquid or aggregates. From this viewpoint, the water content based on the low-crystalline powdery cellulose in the reaction system is preferably 100% by mass or less, more preferably 80% by mass or less and still more preferably from 5 to 50% by mass.

In the present invention, although the reaction between the low-crystalline powdery cellulose and the epoxy compound is preferably carried out while maintaining the condition in which the reactants are dispersed in a powder form as described above, the reaction may also be conducted in a dispersing medium containing a non-aqueous solvent in addition to water. Examples of non-aqueous polar solvents among these non-aqueous solvents include those ordinarily used for the cellulose alkalization, e.g., secondary or tertiary lower alcohols such as isopropanol and tert-butanol; ether solvents such as 1,4-dioxane, ethylene glycol dimethyl ether, diglymes or triglymes such as diethylene glycol dimethyl ether, diethylene glycol diethyl ether, diethylene glycol dibutyl ether and triethylene glycol dimethyl ether, and polyethylene glycol dimethyl ether; and hydrophilic polar solvents such as dimethyl sulfoxide. In addition, the reaction may also be carried out under the dispersed condition using a non-aqueous low-polar or non-polar solvent such as toluene, xylene, benzene, hexane, cyclohexane and other hydrocarbons oils.

When the reaction is conducted under the dispersed condition using these solvents, it is required to control the amount of the solvent used in the reaction such that the reactants are well dispersed even in such a solvent without being aggregated. However, if the solvent is used in an excessively large amount, the catalyst is diluted therewith to a more than necessary extent, resulting in considerable decrease in reaction rate. Therefore, the amount of the non-aqueous solvent used in the reaction is preferably 20 times or less and more preferably 10 times or less the mass of the low-crystalline powdery cellulose.

The reactor usable in the present invention preferably includes those reactors capable of mixing the low-crystalline powdery cellulose, catalyst and epoxy compound with each other as uniformly as possible, and most preferably includes mixing devices such as mixers as well as a so-called kneader used for kneading resins, as described in paragraph [0016] of JP 2002-114801A.

The kneader-type reactor usable in the present invention is not particularly limited as long as it can provide a sufficient stirring operation. For example, as described in "Chemical Engineering Handbook; Revised 5th Edition", edited by Society of Chemical Engineers, Japan, published by Maruzen Co., Ltd., pp. 917 to 919, there may be used single-screw kneaders such as a ribbon mixer, a co-kneader, a Votator and a screw-type kneader, and twin-screw kneaders such as a double-arm type kneader.

In the production process of the present invention, the reaction proceeds under a powder condition. However, since the powder condition is poorer in fluidity than a slurry condition, the kneader used in the reaction tends to suffer from deposits on an inner wall surface thereof, which results in occurrence of portions having a low reaction efficiency owing to insufficient stirring. To solve the problem, it is desirable to change an angle of a drive axis of a reaction container in the kneader-type reactor relative to a horizontal plane to allow the deposits to fall off from the inner wall surface of the reaction container and fully mix all of the contents in the reactor with each other. Examples of the suitable kneader-type reactor of such an angle-variable type include angle-variable type ribbon mixers, co-kneaders, single-screw kneaders and double-arm type kneaders. A specific example of the angle-variable type ribbon mixers is shown in Figs. 1 and 2. However, the reactor used in the present invention is not particularly limited to the thus illustrated reactor.

When the reaction under the powder condition is carried out using the double-arm kneader-type reactor, it is preferable to use a ribbon-type, paddle-type or blade-type agitation device therein. The kneader-type reactor may be of either a batch type or a continuous type.

The first to fourth embodiments of the present invention are respectively described below.

[Production of Cationized Cellulose Ether]

In the first embodiment of the present invention, the low-crystalline powdery cellulose is reacted with a glycidyl trialkyl ammonium salt represented by the following general formula (1) in the presence of a catalyst to obtain a cationized cellulose ether derivative represented by the following general formula (2-1) (hereinafter occasionally referred to merely as a "cationized cellulose ether").

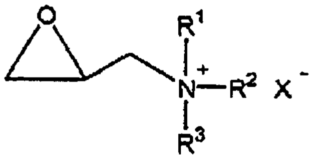

(1)

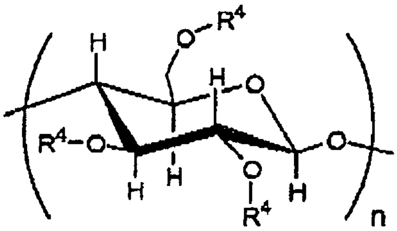

(2-1)

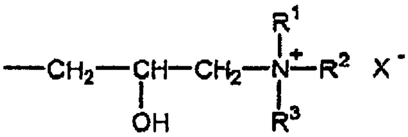

(3)

In the above general formula (2-1), $R^4$ is a hydrogen atom or a cation group represented by the above general formula (3) with the proviso that all of the $R^4$ groups are not hydrogen atoms at the same time; and n is a number of from 100 to 2000 and preferably from 100 to 1000.

The degree of substitution of the cation group represented by the above general formula (3) which is introduced into the low-crystalline powdery cellulose, per a glucose unit in a molecule of the cellulose, may be controlled as desired, and is preferably from 0.01 to 3 and more preferably from 0.2 to 2. Meanwhile, the substitution degree of the cation group may be measured by the method described in Examples below.

In the first embodiment of the present invention, the glycidyl trialkyl ammonium salt represented by the above general formula (1) (hereinafter occasionally referred to merely as a "cationizing agent") is used as the epoxy compound.

In the above general formulae (1) and (3), $R^1$ to $R^3$ may be the same or different and are respectively a hydrocarbon group having 1 to 4 carbon atoms. Specific examples of the hydrocarbon group include a methyl group, an ethyl group, an n-propyl group, an isopropyl group, an n-butyl group, an isobutyl group and a tert-butyl group. Among these groups, preferred is a methyl group. X represents a halogen atom. Examples of the halogen atom include a chlorine atom, a bromine atom and an iodine atom. Among these halogen atoms, preferred is a chlorine atom.

The glycidyl trialkyl ammonium salt represented by the above general formula (1) may be produced by reacting an epihalohydrin such as epichlorohydrin and epibromohydrin with a tertiary amine such as trimethylamine, triethylamine, tripropylamine and tributylamine. Among them, the combination of epichlorohydrin and trimethylamine is most generally used. Therefore, the combination of $R^1$ to $R^3$ and X is preferably combination of a methyl group and a chlorine atom.

Upon practicing the present invention, the cationizing agent is preferably dehydrated, if required, at the time of the reaction or before the reaction to adjust the water content based on the cellulose in the reaction system to the above-specified range from the viewpoint of allowing the cellulose to undergo the reaction in the powder condition while maintaining its fluidity.

The cationizing agent has a very high efficiency of reaction with the cellulose and may be, therefore, used in substantially the same amount as its stoichiometric amount required to introduce a cation group into the cellulose with a desired substitution degree. More specifically, the amount of the cationizing agent used is preferably from 0.01 to 3 mol per 1 mol of a glucose unit in a molecule of the cellulose. The amount of the cationizing agent used is more preferably from 0.2 to 2 mol per 1 mol of a glucose unit in a molecule of the cellulose from the viewpoints of a good performance of the resulting cationized cellulose ether and a high dehydration efficiency after the reaction.

The catalyst used in the first embodiment of the present invention may be either a base catalyst or an acid catalyst. Of these catalysts, preferred are base catalysts, more preferred are alkali metal hydroxides, and still more preferred are sodium hydroxide and potassium hydroxide.

The catalyst may be added in the form of an aqueous solution or a dilute solution, and then the reaction may be carried out after removing a surplus amount of water from the reaction system. In this case, the reaction is preferably conducted in a fluidizable powder condition without forming a slurry or a high-viscous liquid. Therefore, even when the catalyst is added in the form of a dilute solution, the water content in the reaction system is preferably adjusted to 100% by mass or less on the basis of the cellulose.

The catalyst may be used in an amount sufficient to exhibit a catalytic effect on both the cellulose and the cationizing agent. More specifically, the catalyst is preferably used in an amount corresponding to from 0.1 to 50 mol%, more preferably from 1 to 30 mol% and most preferably from 5 to 25 mol% per a glucose unit in a molecule of the cellulose.

The cationizing agent used in the first embodiment of the present invention may usually contain a small amount of a halohydrin compound thereof in view of its industrial production process. For example, glycidyl trimethyl ammonium chloride may contain 3-chloro-2-hydroxypropyl trimethyl ammonium chloride in an amount of from about 1 to about 2%. The low-crystalline or non-crystalline cellulose used in the present invention is capable of allowing the reaction with the halohydrin compound by alkali to proceed as a complete stoichiometric reaction. In the stoichiometric reaction, the alkali is converted into a salt having no reactivity. Therefore, in order to allow the reaction with the cationizing agent such as glycidyl trimethyl ammonium chloride to proceed in a suitable manner, it is required to use the alkali catalyst in a larger amount than at least the amount consumed by the reaction with the halohydrin compound.

The method of adding the cationizing agent as used in the first embodiment of the present invention is not particularly limited. For example, there may be used (a) a method in which the catalyst is first added to the cellulose, and then the cationizing agent is dropped into the resulting mixture, or (b) a method in which the cationizing agent is first added to the cellulose, and then the catalyst is added to the resulting mixture.

In the method (a), while allowing the reaction to proceed by dropping the cationizing agent, the reaction system may be simultaneously subjected to dehydration to adjust the water content therein to the above-specified range. In the method (b), a whole amount of the cationizing agent may be charged at one time into the cellulose, followed by dehydration under reduced pressure to adjust the water content based on the cellulose to the above-specified range. Then, the catalyst may be added to the resulting mixture to thereby carry out the reaction therebetween,

In the first embodiment of the present invention, owing to a high reaction selectivity of the cationizing agent to the cellulose, it is possible to reduce production of a hydrate (diol compound) of the cationizing agent as a main by-product from the reaction which is represented by the following general formula (6).

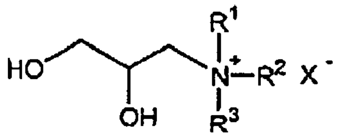

(6)

wherein $R^1$ to $R^3$ are respectively a hydrocarbon group having 1 to 4 carbon atoms and may be the same or different; and X is a halogen atom.

Therefore, in the first embodiment of the present invention, it is possible not only to cationize the cellulose with a desired substitution degree, but also to cationize the cellulose with a high substitution degree which has been conventionally extremely difficult to realize, more specifically, with a substitution degree as high as 1 or more per a glucose unit in a molecule of the cellulose.

In the conventional cationization reaction, a base such as an alkali which is used in the reaction is removed in the form of a neutralized salt thereof after the reaction. However, in the catalytic reaction according to the present invention, it is possible to reduce the amount of the neutralized salt produced. Thus, the amounts of by-products and wastes derived from the cationizing agent or the catalyst are very small, so that purification treatments (such as washing) of the resulting product after completion of the reaction are facilitated, resulting in very large industrial advantages.

In the first embodiment of the present invention, it is preferred that a mixture containing the low-crystalline powdery cellulose, the catalyst and the cationizing agent be reacted in a fluidizable powder condition. If required, the cellulose may be previously mixed with the catalyst or the cationizing agent using a mixing device such as a mixer or a shaker to prepare a uniform mixture or dispersion thereof, and then the resulting mixture or dispersion may be subjected to the reaction.

The temperature used in the reaction in the first embodiment of the present invention is preferably from 0 to 100°C, more preferably from 10 to 90°C and still more preferably from 20 to 80°C.

The reaction in the first embodiment of the present invention may be carried out under normal pressures or under reduced pressure. The pressure used in the reaction, if conducted under reduced pressure, is preferably from 1 to 100 kPa and more preferably from 2 to 20 kPa. Also, in order to prevent occurrence of undesired coloration, the reaction may be carried out in an atmosphere of an inert gas such as nitrogen, if desired.

After completion of the reaction, the catalyst is neutralized with an acid or an alkali, and then the resulting reaction product is dried, if required, after washing it with a solvent such as hydrous isopropanol and hydrous acetone, to obtain the cationized cellulose ether represented by the above general formula (2-1).

In the first embodiment of the present invention, although the cation group represented by the above general formula (3) may be introduced to a hydroxyl group existing at any position of a glucose unit in a molecule of the cellulose, it is possible to adjust a substitution degree of the cation group as desired even when introduced to any position. Therefore,

the cationized cellulose ether obtained according to the first embodiment of the present invention can be used as components to be compounded in cleaning agent compositions such as shampoos, rinses, treatments and conditioners as well as in the applications such as dispersants, modifiers and aggregating agents.

[Production of Glyceryl Group-Containing Cellulose Ether Derivative]

In the second embodiment of the present invention, the above obtained low-crystalline powdery cellulose is reacted with glycidol in the presence of a catalyst to obtain a cellulose ether derivative represented by the following general formula (2-2).

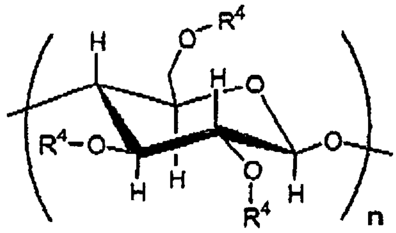

(2-2)

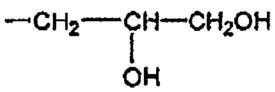

(4)

,

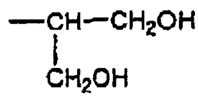

(5)

In the above general formula (2-2), $R^4$ is a hydrogen atom or a substituent group (glyceryl group) represented by the above general formula (4) or (5) with the proviso that all of the $R^4$ groups are not hydrogen atoms at the same time; and n is a number of from 100 to 2000 and preferably from 100 to 1000.

In the cellulose derivative represented by the above general formula (2-2), the substituent degree of the substituent group of the above general formula (4) or (5) to be introduced per a glucose unit in a molecule of the cellulose may be adjusted as desired, and is preferably from 0.01 to 3 and more preferably from 0.2 to 2. Meanwhile, the substitution degree may be measured by the method described in Examples below.

The amount of glycidol used in the second embodiment of the present invention is preferably from 0.01 to 3 mol and more preferably from 0.2 to 2 mol per 1 mol of a glucose unit in a molecule of the cellulose. When the amount of glycidol used lies within the above-specified range, the reaction efficiency of glycidol to the cellulose is extremely high, so that the resulting cellulose derivative has a desired substitution degree, and glycidol is prevented from being further added to a hydroxyl group in the glyceryl group introduced into the cellulose.

When glycidol is used in an amount of more than 3 mol per 1 mol of a glucose unit in a molecule of the cellulose, glycidol is further added to the glyceryl group, so that a polyglyceryl group can be introduced into the cellulose.

The catalyst used in the second embodiment of the present invention is not particularly limited, and may be either a base catalyst or an acid catalyst. Among these catalysts, preferred are base catalysts, more preferred are alkali metal hydroxides, and most preferred are sodium hydroxide and potassium hydroxide.

The catalyst may be added in the form of an aqueous solution or a dilute solution, and then the reaction may be carried out after removing a surplus amount of water from the reaction system. In this case, the reaction is preferably conducted in a fluidizable powder condition without forming a slurry or a high-viscous liquid. Therefore, even when the catalyst is added in the form of a dilute solution, the water content in the reaction system is preferably adjusted to 100% by mass or less on the basis of the cellulose.

The catalyst may be used in an amount sufficient to exhibit a catalytic effect on both the cellulose and glycidol More specifically, the catalyst is preferably used in an amount corresponding to from 0.1 to 50 mol%, more preferably from 1 to 30 mol% and most preferably from 5 to 25 mol% per a glucose unit in a molecule of the cellulose.

The method of adding glycidol as used in the second embodiment of the present invention is not particularly limited. For example, there may be used (a) a method in which the catalyst is first added to the cellulose, and then glycidol is gradually dropped into the resulting mixture to conduct the reaction therebetween, or (b) a method in which a whole amount of glycidol is first added at one time to the cellulose, and then the catalyst is added to the resulting mixture to conduct the reaction therebetween. Among these methods, from the viewpoint of preventing polymerization between molecules of glycidol itself, the method (a) is preferably used.

When the catalyst is added in the form of an aqueous solution, for example, in the method (a), while allowing the reaction to proceed by dropping glycidol, the reaction system may be simultaneously subjected to dehydration to adjust the water content therein to the above-specified range.

In the second embodiment of the present invention, owing to a very high reaction selectivity of glycidol to the cellulose, it is not required that glycidol is used in an excessive amount to achieve a desired substitution degree thereof. Thus, the amounts of by-products derived from glycidol, e.g., hydrates or polymers thereof such as glycerol and polyglycerol, can be considerably reduced. Therefore, it is possible to introduce a glyceryl group into the cellulose with a desired substitution degree.

In the ordinary glyceryl-introducing reaction, a base such as an alkali which is used in the reaction is removed in the form of a neutralized salt thereof after the reaction. However, in the catalytic reaction according to the present invention, it is possible to reduce the amount of the neutralized salt derived from the catalyst. Thus, the amounts of by-products and wastes derived from glycidol or the catalyst are very small, so that purification treatments (such as washing) of the resulting product after completion of the reaction are facilitated, resulting in very large industrial advantages.

In the second embodiment of the present invention, it is preferred that a mixture containing the low-crystalline powdery cellulose, the catalyst and glycidol be reacted in a fluidizable powder condition. If required, the powdery cellulose may be previously mixed with the catalyst or glycidol using a mixing device such as a mixer or a shaker to prepare a uniform mixture or dispersion thereof, and then the resulting mixture or dispersion may be subjected to the reaction.

The temperature used in the reaction in the second embodiment of the present invention is preferably from 0 to 150°C, more preferably from 10 to 100°C and still more preferably from 20 to 80°C from the viewpoint of preventing polymerization between molecules of glycidol itself.

The reaction in the second embodiment of the present invention is preferably carried out under normal pressures. Also, in order to prevent occurrence of undesired coloration, the reaction is preferably carried out in an atmosphere of an inert gas such as nitrogen, if desired.

After completion of the reaction, the reaction mixture is neutralized with an acid or an alkali, and then the resulting reaction product is dried, if required, after washing it with a solvent such as hydrous isopropanol and hydrous acetone, to obtain the cellulose derivative represented by the above general formula (2-2).

In the second embodiment of the present invention, although the substituent group represented by the above general formula (4) or (5) may be introduced to a hydroxyl group existing at any position of a glucose unit in a molecule of the cellulose, it is possible to adjust a substitution degree of the substituent group per the glucose unit as desired even when introduced to any position. Therefore, the cellulose ether derivative obtained according to the second embodiment of the present invention may be used in the applications such as dispersion stabilizers, thickeners or humectants for aqueous compositions as well as components to be compounded in shampoos, rinses and conditioners.

[Production of Hydroxyethyl Cellulose]

In the third embodiment of the present invention, the above obtained low-crystalline powdery cellulose is reacted with ethyleneoxide in the presence of a catalytic amount of a catalyst to obtain hydroxyethyl cellulose.

In the third embodiment of the present invention, the reaction with ethyleneoxide proceeds in a catalytic manner. Owing to a very high reaction selectivity of ethyleneoxide to the cellulose, the substituent degree of a hydroxyethyl group to be introduced per a glucose unit in a molecule of the cellulose may be adjusted as desired according to the amount of ethyleneoxide reacted. However, the substituent degree of a hydroxyethyl group introduced into the cellulose when the resulting hydroxyethyl cellulose is used as the above dispersants or the above starting material for other cellulose ether derivatives is preferably from 0.01 to 3 and more preferably from 0.1 to 2.6.

The amount of ethyleneoxide used in the third embodiment of the present invention is preferably from 0.001 to 20 mol, more preferably from 0.005 to 10 mol and still more preferably from 0.01 to 5 mol per 1 mol of a glucose unit in a molecule of the cellulose. When the amount of ethyleneoxide used lies within the above-specified range, the reaction efficiency of ethyleneoxide to the cellulose is extremely high, so that the resulting hydroxyethyl cellulose can exhibit a desired hydroxyethyl substitution degree.

When glycidol is used in an amount of 3 mol or more per 1 mol of a glucose unit in a molecule of the cellulose, it is also possible to efficiently introduce a polyoxyethylene group into molecules of the cellulose.

The catalyst used in the third embodiment of the present invention is preferably a base catalyst, more preferably an alkali metal hydroxide and still more preferably sodium hydroxide or potassium hydroxide.

The catalyst, in particular, the alkali metal hydroxide as a base catalyst, may be added in the form of a high-concentration aqueous solution or a dilute solution, and then the reaction may be carried out after removing a surplus amount of water from the reaction system. Further, the catalyst may also be added in a solid state, for example, using a mixing device such as a ball mill.

Since the reaction of the present invention proceeds in a catalytic manner, the catalyst may be used in an amount sufficient to exhibit a catalytic effect on both the cellulose and ethyleneoxide. More specifically, the catalyst is preferably used in an amount corresponding to from 0.01 to 0.5 mol (from 1 to 50 mol%) and more preferably from 0.05 to 0.3 mol per 1 mol of a glucose unit in a molecule of the cellulose.

In the present invention, the reaction between the cellulose and ethyleneoxide is preferably carried out in the

condition in which the reactants are fully dispersed in a fluidizable powder condition without forming a swellable slurry, a high-viscous liquid or aggregates. From this viewpoint, when adding the base catalyst in the form of the above dilute solution, the water content based on the cellulose in the reaction system is preferably adjusted to 100% by mass or less.

The third embodiment of the present invention may be carried out as follows. That is, the low-crystalline powdery cellulose and the catalyst are dispersed in the above solvent in a reaction vessel such as an autoclave which is capable of reacting ethyleneoxide therewith. Then, after an interior of the reaction vessel is fully purged with an inert gas such as nitrogen, a desired amount of ethyleneoxide is added to the resulting dispersion to conduct the reaction therebetween. Further, in the present invention, in addition to a mixing device such as a mixer, there may be used a kneader-type reactor capable of conducting the reaction under pressurized condition which maybe manufactured, for example, by fitting a pressure gauge to a kneader-type mixer used for kneading resins, as described in JP 2002-114801A, the above kneader-type reactor as described in "Chemical Engineering Handbook; Revised 5th Edition", edited by Society of Chemical Engineers, Japan, published by Maruzen Co., Ltd., pp. 917 to 919, or the above angle-variable kneader-type reactor and further by improving an air-tightness and a pressure resistance thereof. When using such a kneader-type reactor, the reaction does not necessarily require use of the solvent, so that the cellulose can be desirably mixed and reacted with ethyleneoxide in a uniform and fluidizable powder condition.

The temperature used in the reaction in the third embodiment of the present invention is preferably from 0 to 100°C and more preferably from 10 to 80°C. The pressure used in the reaction is not particularly limited, and is preferably in the range of from 0.001 to 1.0 MPa according to the amount of ethyleneoxide used. The reaction may also be carried out under a slightly pressurized condition, if required, while flowing a mixed gas diluted with an inert gas such as nitrogen little by little through the reaction system.

In the third embodiment of the present invention, after completion of the reaction, unreacted ethyleneoxide is removed from the reaction mixture, and then the catalyst is neutralized with an acid. Further, the resulting reaction product is dried, if required, after washing it with a solvent such as hydrous isopropanol and hydrous acetone, to obtain hydroxyethyl cellulose as aimed.

In the third embodiment of the present invention, owing to a very high reaction selectivity of from ethyleneoxide to the cellulose, the resulting hydroxyethyl cellulose may be directly subjected to subsequent reactions for synthesis of various further derivatives without conducting the procedure for removing the catalyst in the form of the neutralized salt after completion of the reaction, for example, may be directly reacted with a cationizing agent, e.g., glycidyltrimethyl ammonium chloride for synthesis of cationized hydroxyethyl celluloses.

More specifically, by utilizing the third embodiment of the present invention, various other cellulose ether derivatives which are obtained using hydroxyethyl cellulose as a starting material can be synthesized from the cellulose in an one-pot manner.

In the third embodiment of the present invention, although the hydroxyethyl group produced may be introduced to a hydroxyl group existing at any position of a glucose unit in a molecule of the cellulose, it is possible to adjust a substitution degree of the hydroxyethyl group per the glucose unit as desired even when introduced to any position. Therefore, the hydroxyethyl cellulose obtained according to the third embodiment of the present invention may be used in various extensive applications as components to be compounded in dispersants, stabilizers for paints, cosmetics, building materials, thickeners, adhesives, drugs, and as a starting material for other cellulose ether derivatives.

[Production of Hydroxypropyl Cellulose]

In the fourth embodiment of the present invention, the above obtained low-crystalline powdery cellulose is reacted with propyleneoxide to obtain hydroxypropyl cellulose.

The substituent degree of a hydroxypropyl group in the hydroxypropyl cellulose obtained in the fourth embodiment of the present invention per a glucose unit in a molecule of the cellulose may be adjusted as desired. However, the substituent degree of a hydroxypropyl group in the hydroxypropyl cellulose is preferably from 0.01 to 3 and more preferably from 0.1 to 2.

The amount of propyleneoxide used in the fourth embodiment of the present invention is preferably from 0.001 to 3 mol and more preferably from 0.1 to 2 mol per 1 mol of a glucose unit in a molecule of the cellulose. When the amount of propyleneoxide used lies within the above-specified range, the reaction efficiency of propyleneoxide to the cellulose is extremely high, so that the resulting hydroxypropyl cellulose has a desired substitution degree of the hydroxypropyl group.

The catalyst used in the fourth embodiment of the present invention may be either a base catalyst or an acid catalyst. Among these catalysts, preferred are base catalysts, more preferably alkali metal hydroxides, and still more preferred are sodium hydroxide and potassium hydroxide.

The catalyst may be added in the form of a high-concentration aqueous solution or a dilute solution, and then the reaction may be carried out after removing a surplus amount of water from the reaction system. The reaction is preferably carried out in a fluidizable powder condition without forming a slurry or a high-viscous liquid. Therefore, even

when adding the catalyst in the form of a dilute solution, the water content in the reaction system is preferably adjusted to 100% by mass or less.

The catalyst may be used in an amount sufficient to exhibit a catalytic effect on both the cellulose and propyleneoxide. More specifically, the catalyst is preferably used in an amount corresponding to from 0.1 to 50 mol%, more preferably from 1 to 30 mol% and most preferably from 5 to 25 mol% per a glucose unit in a molecule of the cellulose.

The method of adding propyleneoxide as used in the fourth embodiment of the present invention is not particularly limited. For example, there may be used (a) a method in which the catalyst is first added to the cellulose, and then propyleneoxide is dropped into the resulting mixture, or (b) a method in which a whole amount of propyleneoxide is first added at one time to the cellulose, and then the catalyst is gradually added to the resulting mixture to conduct the reaction therebetween. Among these methods, from the viewpoint of preventing polymerization between molecules of propyleneoxide itself, the method (a) is preferably used. When the reaction is conducted at a temperature not lower than a boiling point of propyleneoxide, it is preferred that propyleneoxide be gradually dropped using a reactor equipped with a reflux tube.

In the fourth embodiment of the present invention, owing to a very high reaction selectivity of propyleneoxide to the cellulose, it is not required that propyleneoxide is used in an excessive amount. As a result, the amounts of by-products derived from propyleneoxide such as propylene glycol can be considerably reduced. Further, owing to the catalytic reaction, it is possible to reduce the amount of the neutralized salt derived from the catalyst. Thus, the amounts of the by-products and wastes derived from propyleneoxide and the catalyst are kept very small, so that purification treatments (such as washing) of the resulting product after completion of the reaction are facilitated, resulting in very large industrial advantages.

In the fourth embodiment of the present invention, it is preferred that the low-crystalline powdery cellulose, the catalyst and propyleneoxide be reacted in a fluidizable powder condition. If required, the powdery cellulose may be previously mixed with the catalyst using a mixing device such as a mixer, a shaker, a mixing mill to prepare a uniform mixture or dispersion thereof, and then the resulting mixture or dispersion may be mixed with propyleneoxide to conduct the reaction therebetween.

The temperature used in the reaction in the fourth embodiment of the present invention is preferably from 0 to 150°C. From the viewpoint of avoiding polymerization between molecules of propyleneoxide and occurrence of rapid reaction, the reaction temperature is more preferably from 10 to 100°C and still more preferably from 20 to 80°C.

The reaction in the fourth embodiment of the present invention is preferably carried out under normal pressures. In order to prevent occurrence of undesired coloration, the reaction is preferably carried out in an atmosphere of an inert gas such as nitrogen, if desired.

After completion of the reaction, a trace amount of unreacted propyleneoxide is distilled off from the reaction mixture, and then the catalyst is neutralized with an acid or an alkali, and further the resulting reaction product is dried, if required, after washing it with a solvent such as hydrous isopropanol and hydrous acetone, to obtain hydroxypropyl cellulose. Further, the resulting hydroxypropyl cellulose may be directly subjected to subsequent reactions for synthesis of various further derivatives without conducting the procedure for removing the catalyst after completion of the reaction, for example, may be directly reacted with glycidyltrimethyl ammonium chloride for synthesis of cationized hydroxypropyl celluloses.

In the fourth embodiment of the present invention, although the hydroxypropyl group may be introduced to a hydroxyl group existing at any position of a glucose unit in a molecule of the cellulose, it is possible to adjust a substitution degree of the hydroxypropyl group per the glucose unit as desired even when introduced to any position. Therefore, the hydroxypropyl cellulose obtained according to the fourth embodiment of the present invention may be used in various extensive applications as components to be compounded in medical preparations or coating compositions.

## EXAMPLES

### (1) Water Content Based on Cellulose

The water content based on cellulose was measured at 150°C using an infrared moisture meter "FD-610" available from Kett Electric Laboratory

In order to confirm an optimum water content based on cellulose when reacted with an epoxy compound according to the present invention, a given amount of water was added to the amorphized powdery cellulose obtained in the below-mentioned Production Example 1, and the resulting mixture was violently stirred and shaken to repeatedly observe an aggregated condition thereof by visual evaluation.

As a result, it was confirmed that although the amorphized powdery cellulose thus produced contained water in an amount of at least 5% by mass, it was suitable to adjust the water content based on the cellulose to 100% by mass or less, more preferably 80% by mass or less, still more preferably 50% by mass or less and further still more preferably 30% by mass or less in order to allow the cellulose to react in a fluidizable powder condition. The results are shown in

Table 1.

TABLE 1

| (Change in condition owing to water content based on amorphized cellulose) | | | | | | | | | | |
|---|---|---|---|---|---|---|---|---|---|---|
| Water content (mass%) | 30 | 50 | 70 | 80 | 90 | 100 | 110 | 130 | 150 | 200 |
| Condition observed by visual evaluation | A | A-B | B | B | B-C | B-C | C* | C* | C*-D | D |
| Note A: Fine powder; B: Powder (fluidizable); C: Partially aggregated but still fluidizable; C*: Partially aggregated with occurrence of water bleeding; D: Completely aggregated (no fluidity) | | | | | | | | | | |

(2) Calculation of Crystallinity

The crystallinity of cellulose was calculated from a diffraction spectrum peak intensity which was measured under the following conditions using a "Rigaku RINT 2500VC X-RAY diffractometer" available from Rigaku Corporation, according to the above calculation formula.

Measuring Conditions:

X-ray source: Cu/K$\alpha$-radiation; tube voltage: 40 kV; tube current: 120 mA; measuring range: diffraction angle 2$\theta$ = 5 to 45°; The sample to be measured was prepared by compressing pellets each having an area of 320 $mm^2$ and a thickness of 1 mm; X-ray scanning speed: 10°/min.

(3) Measurement of Polymerization Degree of Powdery Cellulose

The polymerization degree of powdery cellulose was measured by copper/ammonia method as described in ISO-4312.

(4) Calculation of Substitution Degree

(a) Calculation of Substitution Degree of Cation Group

The substitution degree of a cation group represents an average molar number of the cation group introduced per a glucose unit in a molecule of the cellulose, and was calculated by an ordinary method (colloidal titration method) using a polyanion reagent for colloidal titration. Meanwhile, the measurement of the substitution degree of a cation group was carried out using an automatic titrator "AT-150" available from Kyoto Electronics Manufacturing Co., Ltd. In addition, the substitution degree was also confirmed by the chlorine content and the nitrogen content determined by elemental analysis.

(b) Calculation of Substitution Degree of Glyceryl Group

The substitution degree of a glyceryl group represents an average molar number of the glyceryl group introduced per a glucose unit in a molecule of the cellulose. The analysis of properties of the product (such as substitution degree) was conducted by first subjecting the product to acetylation by an ordinary method using acetic anhydride and pyridine, and then subjecting the resulting acetylated product to various kinds of NMR analysis (analyzer: "Utility Inova 300" available from Varian Inc.).

(c) Calculation of Substitution Degree of Hydroxyethyl Group

The substitution degree of a hydroxyethyl group represents an average molar number of the hydroxyethyl group introduced per a glucose unit in a molecule of the cellulose, and was calculated by the method described in "Macromol. Biosci.", 5, 58 (2005) in which the obtained product was acetylated by an ordinary method, and the resulting acetylated product was subjected to various kinds of NMR spectrum analysis (analyzer: "Utility Inova 300" available from Varian Inc.).

(d) Calculation of Substitution Degree of Hydroxypropyl Group

The substitution degree of a hydroxypropyl group represents an average molar number of the Hydroxypropyl group introduced per a glucose unit in a molecule of the cellulose, and was calculated by the same method as used in

the above item (c) for calculation of substitution degree of hydroxyethyl group.

(5) Measurement of Average Particle Size of Powdery Cellulose

The average particle size of the powdery cellulose was measured using a laser diffraction/scattering-type particle size distribution measuring instrument "LA-920" available from Horiba Co., Ltd. Meanwhile, the refractive index used in the above measurement was 1.2.

PRODUCTION EXAMPLE 1 (Production of Amorphized Powdery Cellulose)

A wood pulp sheet (pulp sheet available from Borregaard Inc.; crystallinity: 74%) was cut into chips using a shredder "MSX2000-IVP440F" available from Meikoshokai Co., Ltd.

Then, the thus obtained pulp chips were charged into a twin-screw extruder "EA-20" available from Suehiro EPM Corporation, at a feed rate of 2 kg/h and passed through the extruder one time at shear rate of 660 $sec^{-1}$ and a screw rotating speed of 300 rpm while flowing a cooling water from outside therethrough to obtain a powder.

Next, the thus obtained powdery cellulose was charged into a batch-type medium-stirring mill "SAND GRINDER" available from Igarashi Kikai Co., Ltd., having a container capacity of 800 mL which was filled with 720 g of 5 mmϕ zirconia beads at a filling ratio of 25% and fitted with an agitation blade having a diameter of 70 mm. While flowing a cooling water through a jacket of the container, the powdery cellulose was pulverized at a stirring speed of 2000 rpm and a temperature of from 30 to 70°C for 2.5 h, thereby obtaining a powdery cellulose (crystallinity: 0%; polymerization degree: 600; average particle size: 40 μm). In the above reaction of the powdery cellulose, there were used undersize particles thereof (90% of the raw material charged) obtained by further passing the powdery cellulose through a 32 μm-mesh sieve.

Meanwhile, various low-crystalline powdery celluloses which were different in crystallinity from each other were prepared by changing a treating time thereof in a ball mill.

PRODUCTION EXAMPLE 2 (Production of Amorphized Powdery Cellulose)

The same procedures using the shredder and the extruder as in Production Example 1 were repeated to obtain a powdery cellulose. Then, 100 g of the thus obtained powdery cellulose were charged into a batch-type medium-stirring ball mill "ATTRITOR" available from Mitsui Mining & Smelting Co., Ltd., (container rapacity: 800 mL; filled with 1400 g of 6 mmϕ steel balls; diameter of agitation blade: 65 mm). While flowing a cooling water through a jacket of the container, the powdery cellulose was pulverized at a stirring speed of 600 rpm for 3 h, thereby obtaining a powdery cellulose (crystallinity: 0%; polymerization degree: 600; average particle size: 40 μm). In the above reaction of the powdery cellulose, there were used undersize particles thereof (90% of the raw material charged) obtained by further passing the powdery cellulose through a 32 μm-mesh sieve.

EXAMPLE 1-1

A 1-L kneader "PNV-1 Model" available from Irie Shokai Co., Ltd., was charged with 100 g of the amorphized cellulose (crystallinity: 0%; polymerization degree: 600) obtained in Production Example 1 and then with 5 g of a 48 mass% sodium hydroxide aqueous solution (2% by mass based on cellulose), and the contents of the kneader were stirred in a nitrogen atmosphere for 3 h. Thereafter, the kneader was heated to 50°C by a warm water, and then 95 g of glycidyl trimethyl ammonium chloride (water content: 20% by mass; purity: 90% or more) as a cationizing agent available from Sakamoto Yakuhin Kogyo Co., Ltd., (0.73 mol per 1 mol of a glucose unit in a molecule of the cellulose) was dropped thereinto over 2 h. Then, the contents of the kneader were further stirred at 50°C for 3 h. As a result of analysis by high-pressure liquid chromatography (HPLC), it was confirmed that a whole amount of the cationizing agent was consumed. Thereafter, the resulting reaction mixture was neutralized with acetic acid, and the obtained reaction product was taken out from the kneader, washed with hydrous isopropanol (water content: 15% by mass) and acetone, and then dried under reduced pressure, thereby obtaining 140 g of a cationized cellulose ether as a white solid. As a result of subjecting the white solid to elemental analysis and colloidal titration, it was confirmed that the chlorine element content was 9.4%, the nitrogen element content was 3.7%, the substitution degree of the cation group introduced into the cellulose was 0.71 per a glucose unit in a molecule of the cellulose, and the reaction selectivity to the cellulose (based on the cationizing agent) was 96%.

COMPARATIVE EXAMPLE 1-1

The reaction was carried out in the same manner as in Example 1-1 except for using crystalline powdery

cellulose "CELLULOSE POWDER KC FLOCK W-50(S)" available from Nippon Paper Chemicals Co., Ltd., (crystallinity: 74%; polymerization degree: 500) as the cellulose. As a result of HPLC analysis, no unreacted glycidyl trimethyl ammonium chloride remained. However, it was confirmed that the substitution degree of the cation group introduced into the cellulose was as low as 0.097 per a glucose unit in a molecule of the cellulose, and the reaction selectivity to the cellulose was as low as 13%.

COMPARATIVE EXAMPLE 1-2

A 2-L flask was charged with 100 g of the crystalline powdery cellulose used in Comparative Example 1-1, and then 1500 mL of a 20 mass% sodium hydroxide aqueous solution were added to the flask in a nitrogen atmosphere to immerse the crystalline powdery cellulose therein for one day. Further, after the contents of the flask were stirred by a stirrer for 5 h at room temperature, the surplus sodium hydroxide aqueous solution was removed by filtration, and the resulting filter cake was compressed to obtain about 200 g of an alkali cellulose.

The thus obtained alkali cellulose was charged into the above 1.-L kneader, and then 500 mL of dimethyl sulfoxide as a non-aqueous solvent was added thereto to disperse the alkali cellulose therein. Next, 95 g of the above glycidyl trimethyl ammonium chloride was added to the kneader to react with the alkali cellulose at 50°C for 5 h. As a result, it was confirmed that a whole amount of glycidyl trimethyl ammonium chloride as the raw material was consumed. The resulting reaction mixture was neutralized with acetic acid, and after distilling off the solvent therefrom, the obtained reaction product was washed with hydrous isopropanol (water content: 15% by mass) and acetone, and then dried under reduced pressure, thereby obtaining 105 g of a cationized cellulose ether as a white solid. As a result, it was confirmed that the substitution degree of the cation group introduced into the cellulose was 0.015 per a glucose unit in a molecule of the cellulose, and the reaction selectivity to the cellulose was as low as 2%.

EXAMPLE 1-2

The same procedure as in Example 1-1 was repeated except for using 100 g of the powdery cellulose produced according to Production Example 1 (crystallinity: 37%; polymerization degree: 600) as the low-crystalline powdery cellulose, and using 10 g of a 48 mass% sodium hydroxide aqueous solution (5% by mass based on the cellulose). As a result, it was confirmed that a whole amount of glycidyl trimethyl ammonium chloride as the raw material was consumed, the substitution degree of the cation group introduced into the cellulose was 0.70 per a glucose unit in a molecule of the cellulose, and the reaction selectivity to the cellulose was 94%.

EXAMPLE 1-3

The above 1-L kneader was charged with 100 g of the amorphized cellulose (crystallinity: 0%; polymerization degree: 400) obtained according to Production Example 1, and then 135 g of the above glycidyl trimethyl ammonium chloride (1.04 mol per 1 mol of a glucose unit in a molecule of the cellulose) was added thereinto at one time, followed by stirring the resulting mixture at room temperature for 2 h. Then, the contents of the kneader were heated to 50°C and dehydrated under a reduced pressure of from 2 to 10 kPa. As a result, it was confirmed that the water content based on the cellulose in the reaction system was 9.6% by mass.

Then, 5 g of the 48 mass% sodium hydroxide aqueous solution (2% by mass based on the cellulose) were added to the resulting reaction mixture while spraying thereover, and the obtained mixture was stirred as such for 5 h. As a result of HPLC analysis, it was confirmed that a whole amount of glycidyl trimethyl ammonium chloride as the raw material was consumed. Thereafter, the resulting reaction mixture was neutralized with 1-N hydrochloric acid, and the obtained reaction product was taken out from the kneader, washed with hydrous isopropanol (water content: 15% by mass) and acetone, and then dried under reduced pressure, thereby obtaining 188 g of a cationized cellulose ether as a white solid. As a result of subjecting the white solid to elemental analysis and colloidal titration, it was confirmed that the chlorine element content was 11%, the nitrogen element content was 4.4%, the substitution degree of the cation group introduced into the cellulose was 1.00 per a glucose unit in a molecule of the cellulose, and the reaction selectivity to the cellulose was 95%.

EXAMPLE 1-4

The above 1-L kneader was charged with 100 g of the amorphized cellulose (crystallinity: 0%; polymerization degree: 400) obtained according to Production Example 1 and then with 5 g of a 48 mass% sodium hydroxide aqueous solution (2% by mass based on cellulose), and the contents of the kneader were stirred in a nitrogen atmosphere for 3 h. Thereafter, the kneader was heated to 60°C by a warm water, and then while dehydrating the contents of the kneader under a pressure of 5 to 10 kPa, 230 g of the above glycidyl trimethyl ammonium chloride (1.77 mol per 1 mol of a

glucose unit in a molecule of the cellulose) was dropped thereinto over 3 h. Then, the contents of the kneader were further stirred for 3 h, so that about 15 g of water was removed from the reaction system. As a result of HPLC analysis, it was confirmed that 92% of glycidyl trimethyl ammonium chloride as the raw material was consumed. Thereafter, the resulting reaction mixture was neutralized as such with acetic acid, and the obtained reaction product was taken out from the kneader, washed with hydrous isopropanol (water content: 15% by mass) and acetone to remove the neutralized salt and unreacted raw materials therefrom, and then dried under reduced pressure, thereby obtaining 270 g of a cationized cellulose ether as a light-brownish white solid. As a result of subjecting the solid to elemental analysis and colloidal titration, it was confirmed that the chlorine element content was 16%, the nitrogen element content was 6.4%, the substitution degree of the cation group introduced into the cellulose was 1.49 per a glucose unit in a molecule of the cellulose, and the reaction selectivity to the cellulose was 91%.

EXAMPLE 1-5

The reaction was carried out for 5 h in the same manner as in Example 1-1 except for adding 500 mL of dimethyl sulfoxide as the solvent to the reaction system. However, since the amount of glycidyl trimethyl ammonium chloride as the raw material consumed was 90%, the reaction was further conducted for 2 h. As a result, it was confirmed that a whole amount of glycidyl trimethyl ammonium chloride as the raw material was consumed, the substitution degree of the cation group introduced into the cellulose was 0.69 per a glucose unit in a molecule of the cellulose, and the reaction selectivity to the cellulose was 94%.

EXAMPLE 1-6

The reaction was carried out in the same manner as in Example 1-5 except for adding 500 mL of hydrous isopropanol (water content: 15% by mass) as the solvent to the reaction system. As a result, it was confirmed that a whole amount of glycidyl trimethyl ammonium chloride as the raw material was consumed, the substitution degree of the cation group introduced into the cellulose was 0.35 per a glucose unit in a molecule of the cellulose, and the reaction selectivity to the cellulose was 50%.

EXAMPLE 1-7

A stirring-type ball mill "ATTRITOR" available from Mitsui Mining & Smelting Co., Ltd., was charged with 600 g of the amorphized cellulose (crystallinity: 0%; polymerization degree: 600) obtained in Production Example 1 and 10.9 g of sodium hydroxide (2% by mass based on cellulose), and the contents of the ball mill were mixed in a nitrogen atmosphere using steel balls (filling rate: 30%). The resulting mixture was charged into a 5-L kneader "PNV-5 Model" available from Irie Shokai Co., Ltd., and heated to 70°C. While dehydrating the mixture under a reduced pressure of 10 to 20 kPa, 777.7 g of hydrous glycidyl trimethyl ammonium chloride (water content: 20% by mass; purity: 90% or more) (1.0 mol per 1 mol of a glucose unit in a molecule of the cellulose) was dropped thereto over 10 h. Then, the contents of the kneader were further stirred for 2 h. As a result of HPLC analysis, it was confirmed that a whole amount of glycidyl trimethyl ammonium chloride was consumed. Thereafter, the resulting reaction mixture was neutralized with acetic acid, and the obtained reaction product was taken out from the kneader, washed with hydrous isopropanol (water content: 15% by mass) and acetone, and then dried under reduced pressure, thereby obtaining 1.14 kg of a cationized cellulose ether as a light-brownish white solid. As a result of subjecting the solid to colloidal titration, it was confirmed that the substitution degree of the cation group introduced into the cellulose was 0.96 per a glucose unit in a molecule of the cellulose, and the reaction selectivity to the cellulose (based on the cationizing agent) was 96%.

From the above results, it was confirmed that Examples 1-1 to 1-7 were improved in reaction selectivity of the cationizing agent as compared to Comparative Examples 1-1 and 1-2, and were, therefore, capable of producing a cationized cellulose ether having a desired substitution degree of the cationizing agent in an efficient manner.

EXAMPLE 2-1

A 1-L kneader "PNV-1 Model" available from Irie Shokai Co., Ltd., was charged with 100 g of the low-crystalline cellulose (crystallinity: 37%; polymerization degree: 500) obtained according to Production Example 1 and 37 g (0.50 mol) of glycidol, and the contents of the kneader were stirred at room temperature in a nitrogen atmosphere for 2 h. Then, while stirring, the resulting mixture was sprayed with 5.8 g of a 48 mass% sodium hydroxide aqueous solution and then heated to 50°C, and while keeping the conditions, the reaction therebetween was carried out for 6 h. During the reaction, the cellulose was maintained in a fluidizable powder condition. Thereafter, the resulting reaction mixture was neutralized with acetic acid, and the obtained reaction product was taken out from the kneader, washed with hydrous isopropanol (water content: 15% by mass) and acetone, and then dried under reduced pressure, thereby obtaining 130

g of a cellulose derivative as a white solid. As a result, it was confirmed that the substitution degree of the glyceryl group introduced into the cellulose was 0.72, and the reaction rate of glycidol to the cellulose was 90%.

COMPARATIVE EXAMPLE 2-1

The reaction was carried out in the same manner as in Example 2-1 except for using crystalline powdery cellulose "CELLULOSE POWDER KC FLOCK W-50(S)" available from Nippon Paper Chemicals Co., Ltd., (crystallinity: 74%; polymerization degree: 500) as the cellulose. As a result, it was confirmed that no increase in mass of the reaction product was observed, the substitution degree of the glyceryl group introduced into the cellulose was 0.02, and the reaction rate of glycidol to the cellulose was as low as 2%.

EXAMPLE 2-2

The reaction was carried out in the same manner as in Example 2-1 except that 400 mL of polyethylene glycol dimethyl ether "POLYETHYLENE GLYCOL DIMETHYL ETHER 500" (reagent available from Merk & Co., Inc.) was added as the solvent, and further the reaction time was changed to 20 h. As a result, the reaction system was kept in a very good dispersed condition without occurrence of aggregates. Also, it was confirmed that the substitution degree of the glyceryl group introduced into the cellulose was 0.74, and the reaction rate of glycidol to the cellulose was 91%.

COMPARATIVE EXAMPLE 2-2

The reaction was carried out in the same manner as in Example 2-2 except for using crystalline powdery cellulose "CELLULOSE POWDER KC FLOCK W-50(S)" available from Nippon Paper Chemicals Co., Ltd., (crystallinity: 74%; polymerization degree: 500) as the cellulose. As a result, it was confirmed that no reaction of glycidol to the cellulose occurred.

From the above results, it was confirmed that Examples 2-1 and 2-2 were enhanced in reaction rate of glycidol to the cellulose as compared to Comparative Examples 2-1 and 2-2 and were, therefore, capable of producing a cellulose derivative having a desired substitution degree of a glyceryl group in an efficient manner.

EXAMPLE 3-1

A reactor (a 1.5-L autoclave available from Nitto Koatsu Co., Ltd.) equipped with a metering vessel for ethyleneoxide was charged with 50 g of the amorphized cellulose (crystallinity: 0%; polymerization degree: 600) obtained in Production Example 2 and 10 g of a 20 mass% sodium hydroxide aqueous solution (amount of NaOH: 0.06 mol) and further with 450 g (510 mL) of diethylene glycol dibutyl ether as a dispersing solvent. An interior of the reactor was purged with nitrogen, and the contents of the reactor were stirred as such for 1 h. Then, 50 g (1.14 mol) of ethyleneoxide were charged into the reactor, and the contents of the reactor were heated to 70°C while stirring. The initial pressure inside the reactor was 0.17 MPa. The contents of the reactor were further stirred as such at 70°C for 12 h, so that the inside pressure of the reactor was decreased to 0.10 MPa. Thereafter, unreacted ethyleneoxide was removed out of the reaction system, and the reaction product was taken out from the reactor. the resulting reaction product was neutralized with acetic acid, washed with hydrous isopropanol (water content: 15% by mass) and acetone, and then dried under reduced pressure, thereby obtaining 75 g of hydroxyethyl cellulose as a white solid. As a result, it was confirmed that the substitution degree of the hydroxyethyl group introduced into the cellulose was 2.0 per a glucose unit in a molecule of the cellulose, and the reaction selectivity of ethyleneoxide to the cellulose was 96%.

EXAMPLE 3-2

The reaction was carried out in the same manner as in Example 3-1 except that the stirring was continued until the inside pressure of the reactor reached 0.01 MPa or less. As a result, although the reaction time needed was 24 h, ethyleneoxide was completely consumed, and 98 g (theoretical amount: 100 g) of hydroxyethyl cellulose was obtained as a white solid. It was confirmed that the substitution degree of the hydroxyethyl group introduced into the cellulose was 3.8 per a glucose unit in a molecule of the cellulose, and the reaction selectivity of ethyleneoxide to the cellulose was 96%.

EXAMPLE 3-3

The reaction was carried out in the same manner as in Example 3-1 except for using 450 g of a mixed solvent of tert-butanol and water (mixing ratio: 9:1) as a dispersing solvent, thereby obtaining 73 g of hydroxyethyl cellulose as

a white solid. As a result, it was confirmed that the substitution degree of the hydroxyethyl group introduced into the cellulose was 1.9 per a glucose unit in a molecule of the cellulose, and the reaction selectivity of ethyleneoxide to the cellulose was 78%.

EXAMPLE 3-4

The 1.5-L autoclave as described in Example 3-1 was charged with 150 g of the amorphized cellulose (crystallinity: 0%; polymerization degree: 600) obtained in Production Example 2 and 7.4 g of powdery sodium hydroxide. An interior of the reactor was purged with nitrogen, and the contents of the reactor were heated to 70°C while stirring. Then, while maintaining the inside pressure of the reactor at 0.10 MPa, 100 g of ethyleneoxide were introduced into the reactor over 4 h. After charging ethyleneoxide, the contents of the reactor were further stirred as such at 70°C for 1 h, so that the inside pressure of the reactor was decreased to 0.06 MPa. Thereafter, unreacted ethyleneoxide was removed out of the reaction system, and the reaction product was taken out from the reactor. The resulting reaction product was neutralized with acetic acid, washed with hydrous isopropanol (water content: 15% by mass) and acetone, and then dried under reduced pressure, thereby obtaining 209 g of hydroxyethyl cellulose as a yellowish white solid. As a result, it was confirmed that the substitution degree of the hydroxyethyl group introduced into the cellulose was 1.5 per a glucose unit in a molecule of the cellulose, and the reaction selectivity of ethyleneoxide to the cellulose was 75%.

EXAMPLE 3-5

A 1.1-L pressure reactor of an angle-variable ribbon mixer type as shown in Fig. 2 was charged with 100 g of the amorphized cellulose (crystallinity: 0%; polymerization degree: 600) obtained in Production Example 2 and 5.0 g of powdery sodium hydroxide. An interior of the reactor was purged with nitrogen, and then the contents of the reactor were heated to 50°C while stirring. Then, while maintaining the inside pressure of the reactor at 0.10 MPa, 71 g of ethyleneoxide were introduced into the reactor over 4 h. Thereafter, the contents of the reactor were stirred and aged at 50°C for 1 h. During the period of from initiation of the charging to completion of the aging, the angle of a drive axis of the reactor (line (a) shown in Fig. 2) relative to a horizontal plane was changed to 45° → 0° → -45° → 0° → 45° at the time intervals of 30 min. Thereafter, unreacted ethyleneoxide was removed out of the reaction system, and the reaction product was taken out from the reactor. The resulting reaction product was neutralized with acetic acid, washed with hydrous isopropanol (water content: 15% by mass) and acetone, and then dried under reduced pressure, thereby obtaining 170 g of hydroxyethyl cellulose as a white solid. As a result, it was confirmed that the substitution degree of the hydroxyethyl group introduced into the cellulose was 2.6 per a glucose unit in a molecule of the cellulose, and the reaction selectivity of ethyleneoxide to the cellulose was 95%.

COMPARATIVE EXAMPLE 3-1

A 1-L flask was charged with 50 g of crystalline powdery cellulose "CELLULOSE POWDER KC FLOCK W-400G" available from Nippon Paper Chemicals Co., Ltd., (crystallinity: 74%; polymerization degree: 500), and then 1000 mL of a 20 mass% sodium hydroxide aqueous solution were added to the flask in a nitrogen atmosphere to immerse the crystalline powdery cellulose therein for one day. Further, after the contents of the flask were stirred by a stirrer for 5 h at room temperature, the surplus sodium hydroxide aqueous solution was removed by filtration, and the resulting filter cake was compressed to obtain about 100 g of an alkali cellulose. The thus obtained alkali cellulose contained NaOH as an alkali in an amount of 18 g (0.45 mol).

A whole amount of the thus obtained alkali cellulose was charged into the autoclave as used in Example 3-1, and further tert-butanol and water were added thereto such that the proportion of the solvents was the same as that of Example 3-3 (a mixing ratio of tert-butanol to water: 9:1; total mass: 450 g). Thereafter, 50 g (1.14 mol) of ethyleneoxide were charged into the autoclave, and the contents of the autoclave were heated to 70°C while stirring and reacted as such at 70°C for 12 h. It was confirmed that a whole amount of ethyleneoxide charged was consumed. Thereafter, the reaction product was taken out from the reactor. The resulting reaction product was neutralized with acetic acid, washed with hydrous isopropanol (water content: 15% by mass) and acetone, and then dried under reduced pressure, thereby obtaining 68 g of hydroxyethyl cellulose as a light-brownish white solid. As a result, it was confirmed that the substitution degree of the hydroxyethyl group introduced into the cellulose was 1.45 per a glucose unit in a molecule of the cellulose, and the reaction selectivity of ethyleneoxide to the cellulose was 39%.

From the above results, it was confirmed that Examples 3-1 to 3-5 were enhanced in reaction selectivity of ethyleneoxide to the cellulose as compared to Comparative Example 3-1 and were, therefore, capable of producing hydroxyethyl cellulose having a desired substitution degree of a hydroxyethyl group in an efficient manner.

EXAMPLE 4-1

A 1-L kneader "PNV-1 Model" available from Irie Shokai Co., Ltd., was charged with 100 g of the amorphized cellulose (crystallinity: 0%; polymerization degree: 600) obtained in Production Example 1. Then, 16 g of a 24 mass% sodium hydroxide aqueous solution (amount of NaOH: 0.10 mol) were spray-added to the kneader, and the contents of the kneader were stirred in a nitrogen atmosphere for 4 h. Thereafter, 35 g of propyleneoxide (0.62 mol; available from Kanto Chemical Co., Inc.; guaranteed reagent) was dropped into the kneader over 3 h, and the contents of the kneader were stirred as such at room temperature for 22 h. During the reaction, the cellulose was maintained in a fluidizable powder condition. After distilling off unreacted propyleneoxide (residual amount based on the raw material charged: 6 mol%), the resulting reaction mixture was neutralized with acetic acid, and the obtained reaction product was taken out from the kneader, washed with hydrous isopropanol (water content: 15% by mass) and acetone, and then dried under reduced pressure, thereby obtaining 117 g of hydroxypropyl cellulose as a white solid. As a result of NMR analysis after acetylation of the product conducted by an ordinary method using acetic anhydride in pyridine, it was confirmed that the substitution degree of the hydroxypropyl group introduced into the cellulose was 0.71 per a glucose unit in a molecule of the cellulose, and the reaction was therefore allowed to suitably proceed.

EXAMPLE 4-2

A 1-L kneader "PNV-1 Model" available from Irie Shokai Co., Ltd., to which a condenser was fitted, was charged with 90.0 g of the amorphized cellulose (crystallinity: 0%; polymerization degree: 600) obtained in Production Example 1 and then with 700 mL of dimethyl sulfoxide (8 times the mass of the amorphized cellulose) as a solvent. While stirring the contents of the kneader, 16.0 g of a 24 mass% sodium hydroxide aqueous solution (amount of NaOH: 0.10 mol) were added thereto, and then the contents of the kneader were stirred in a nitrogen atmosphere at room temperature for 3 h. Thereafter, the contents of the kneader were heated to 50°C, and then 30 g of propyleneoxide (0.52 mol; available from Kanto Chemical Co., Inc.; guaranteed reagent) was dropped into the kneader over 3 h, followed by stirring the contents of the kneader for 5 h. After distilling off unreacted propyleneoxide, the resulting reaction mixture was neutralized with acetic acid, and the obtained reaction product was taken out from the kneader, washed with hydrous isopropanol (water content: 15% by mass) and acetone, and then dried under reduced pressure, thereby obtaining 108 g of hydroxypropyl cellulose as a white solid. As a result, it was confirmed that the substitution degree of the hydroxypropyl group introduced into the cellulose was 0.65 per a glucose unit in a molecule of the cellulose, and the reaction was therefore allowed to suitably proceed.

EXAMPLE 4-3

A stirring ball mill "ATTRITOR" available from Mitsui Mining & Smelting Co., Ltd., was charged with 100 g of the amorphized cellulose (crystallinity: 0%; polymerization degree: 600) obtained in Production Example 1 and 4.0 g of sodium hydroxide (amount of NaOH: 0.10 mol), and the contents of the ball mill were mixed in a nitrogen atmosphere using steel balls (filling ratio: 30%). The resulting mixture was charged into a 1-L kneader equipped with a condenser, and heated to 70°C. Then, 35 g of propyleneoxide (0.62 mol; available from Kanto Chemical Co., Inc.; guaranteed reagent) were dropped into the kneader while flowing nitrogen therethrough over 5 h, and the contents of the kneader were stirred as such for 5 h. As a result, it was confirmed that no propyleneoxide as the raw material remained. During the reaction, the cellulose was maintained in a fluidizable powder condition. The resulting reaction mixture was neutralized with acetic acid, and the obtained reaction product was taken out from the kneader, washed with hydrous isopropanol (water content: 15% by mass) and acetone, and then dried under reduced pressure, thereby obtaining 115 g of hydroxypropyl cellulose as a white solid. As a result, it was confirmed that the substitution degree of the hydroxypropyl group introduced into the cellulose was 0.69 per a glucose unit in a molecule of the cellulose, and the reaction was therefore allowed to suitably proceed.

EXAMPLE 4-4

A 1-L flask to which a condenser was fitted, was charged with 60.0 g of the amorphized cellulose (crystallinity: 0%; polymerization degree: 600) obtained in Production Example 1 and 360 g of triethylene glycol dimethyl ether (6 times the mass of the amorphized cellulose). Further, 10.0 g of a 48 mass% sodium hydroxide aqueous solution (amount of NaOH: 0.120 mol) were added to the flask, and then the contents of the flask were stirred in a nitrogen atmosphere at room temperature for 30 min. Thereafter, the contents of the flask were heated to 50°C while stirring, and then 30 g of propyleneoxide (0.52 mol; available from Kanto Chemical Co., Inc.; guaranteed reagent) were dropped into the flask over 3 h, followed by stirring the contents of the flask as such at 50°C for 5 h. After distilling off unreacted propyleneoxide, the resulting reaction mixture was neutralized with acetic acid, and the obtained reaction product was washed with

hydrous isopropanol (water content: 15% by mass) and acetone, and then dried under reduced pressure, thereby obtaining 70 g of hydroxypropyl cellulose as a white solid. As a result, it was confirmed that the substitution degree of the hydroxypropyl group introduced into the cellulose was 0.63 per a glucose unit in a molecule of the cellulose, and the reaction was therefore allowed to suitably proceed.

COMPARATIVE EXAMPLE 4-1

A 3-L four-necked flask was charged with 100 g of crystalline powdery cellulose "CELLULOSE POWDER KC FLOCK W-50(S)" available from Nippon Paper Chemicals Co., Ltd., (crystallinity: 74%; polymerization degree: 500), and then 2 L of dimethyl sulfoxide were added thereto to disperse the cellulose therein. Then, 32 g of a 48 mass% sodium hydroxide aqueous solution (amount of NaOH: 0.38 mol) were added to the flask while stirring the contents of the flask in a nitrogen atmosphere. Further, after the contents of the flask were stirred at room temperature for 1 h, 40 g of propyleneoxide, (0.69 mol) was dropped into the flask over 1 h, followed by stirring the contents of the flask as such at room temperature for 22 h. The resulting reaction mixture was neutralized with acetic acid, and then unreacted propyleneoxide and the solvent were distilled off therefrom. Then, the obtained reaction product was taken out from the flask, washed with hydrous isopropanol (water content: 15% by mass) and acetone, and then dried under reduced pressure, thereby obtaining 102 g of hydroxypropyl cellulose as a light-brownish white solid. As a result, it was confirmed that the substitution degree of the hydroxypropyl group introduced into the cellulose was as low as 0.06 per a glucose unit in a molecule of the cellulose.

From the above results, it was confirmed that Examples 4-1 to 4-4 were capable of producing hydroxypropyl cellulose having a desired substitution degree of a hydroxypropyl group in an efficient manner as compared to Comparative Example 4-1.

INDUSTRIAL APPLICABILITY

In accordance with the production process of the present invention, a cellulose ether derivative can be produced in an industrially convenient and efficient manner. The resulting cellulose ether derivative can be used in various extensive applications as a component to be compounded in cleaning agent compositions, an additive for dispersants, modifiers, aggregating agents and medical preparations, coating agent compositions, or a starting material for other cellulose ether derivatives.

## Claims

1. A process for producing a cellulose ether derivative comprising
producing low-crystalline powdery cellulose having a crystallinity of 50% or less by coarsely crushing sheet-like pulps to obtain chip-like pulps and treating the chip-like pulps by an extruder and further by a ball mill, as well as the step of
reacting the low-crystalline powdery cellulose with an epoxy compound in the presence of a catalyst.

2. The process according to claim 1, wherein the epoxy compound is a compound selected from the group consisting of a glycidyl trialkyl ammonium salt represented by the following general formula (1), glycidol, ethyleneoxide and propyleneoxide,

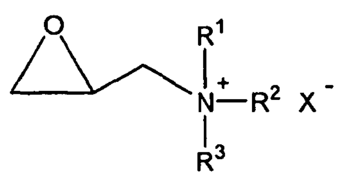 (1)

wherein $R^1$ to $R^3$ may be the same or different and are respectively a hydrocarbon group having 1 to 4 carbon atoms; and X is a halogen atom.

3. The process according to claim 1 or 2, wherein the cellulose ether derivative is a cellulose ether derivative represented by the following general formula (2), hydroxyethyl cellulose or hydroxypropyl cellulose,

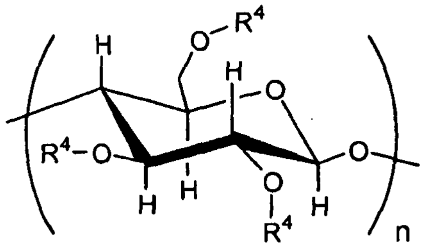 (2)

wherein $R^4$ is a hydrogen atom, a substituent group represented by the following general formula (3) or a substituent group represented by the following general formula (4) or (5), with the proviso that all of the $R^4$ groups are not hydrogen atoms at the same time, and the substituent group of the general formula (3) and the substituent group of the general formula (4) or (5) are not present at the same time; and n is a number of from 100 to 2000,

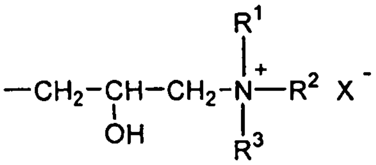 (3) , 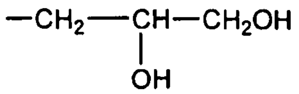 (4) , 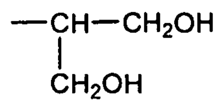 (5)

wherein $R^1$ to $R^3$ and X are the same as defined above.

**4.** The process according to any one of claims 1 to 3, wherein the reaction between the low-crystalline powdery cellulose and the epoxy compound is carried out in the presence of a catalytic amount of the catalyst.

**5.** The process according to any one of claims 1 to 4, wherein a water content based on the low-crystalline powdery cellulose is 100% by mass or less.

**6.** The process according to any one of claims 1 to 5, wherein the reaction is carried out using a non-aqueous solvent in an amount of 20 times or less the mass of the low-crystalline powdery cellulose.

**7.** The process according to any one of claims 1 to 6, wherein the catalyst is an alkali metal hydroxide.

**8.** The process according to any one of claims 1 to 7, wherein the reaction is carried out using a kneader-type reactor.

**Patentansprüche**

**1.** Verfahren zur Herstellung eines Celluloseetherderivats, umfassend:

das Herstellen niedrig-kristalliner pulvriger Cellulose mit einer Kristallinität von 50% oder weniger durch grobes Zerkleinern blattartiger Pulpe, um chipartige Pulpe zu erhalten, und Behandeln der chipartigen Pulpe mit einem Extruder und weiter mit einer Kugelmühle, sowie den Schritt des
Umsetzens der niedrig-kristallinen pulvrigen Cellulose mit einer Epoxidverbindung in Gegenwart eines Katalysators.

**2.** Verfahren gemäß Anspruch 1, bei dem die Epoxidverbindung eine Verbindung ist, die aus der Gruppe ausgewählt ist, die aus einem Glycidyltrialkylammoniumsalz mit der folgenden allgemeinen Formel (1), Glycidol, Ethylenoxid und Propylenoxid besteht,

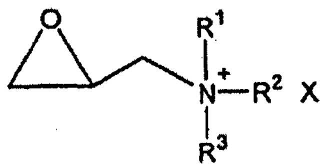 (1)

worin $R^1$ bis $R^3$ gleich oder verschieden sein können und jeweils eine Kohlenwasserstoffgruppe mit 1 bis 4 Kohlenstoffatomen sind; und X ein Halogenatom ist.

3. Verfahren gemäß Anspruch 1 oder 2, bei dem das Celluloseetherderivat ein Celluloseetherderivat mit der folgenden allgemeinen Formel (2), Hydroxyethylcellulose oder Hydroxypropylcellulose ist,

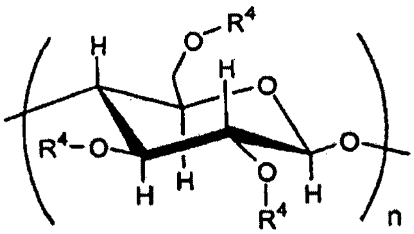
(2)

worin $R^4$ ein Wasserstoffatom, eine Substituentengruppe mit der folgenden allgemeinen Formel (3) oder eine Substituentengruppe mit der folgenden allgemeinen Formel (4) oder (5) ist, mit der Maßgabe, dass alle Gruppen $R^4$ nicht gleichzeitig Wasserstoffatome sind und die Substituentengruppe der allgemeinen Formel (3) und die Substituentengruppe der allgemeinen Formel (4) oder (5) nicht gleichzeitig vorhanden sind; und n eine Zahl von 100 bis 2.000 ist,

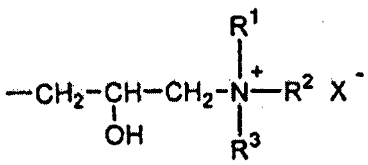 (3) , 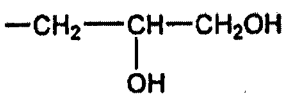 (4) , 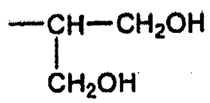 (5)

worin $R^1$ bis $R^3$ und X die gleichen, wie oben definiert, sind.

4. Verfahren gemäß einem der Ansprüche 1 bis 3, bei dem die Reaktion zwischen der niedrig-kristallinen pulvrigen Cellulose und der Epoxidverbindung in Gegenwart einer katalytischen Menge eines Katalysators durchgeführt wird.

5. Verfahren gemäß einem der Ansprüche 1 bis 4, bei dem der Wassergehalt, bezogen auf die niedrig-kristalline pulvrige Cellulose, 100 Massen-% oder weniger beträgt.

6. Verfahren gemäß einem der Ansprüche 1 bis 5, bei dem die Reaktion unter Verwendung eines nicht-wässrigen Lösungsmittels in einer Menge von 20-mal oder weniger der Masse der niedrig-kristallinen pulvrigen Cellulose durchgeführt wird.

7. Verfahren gemäß einem der Ansprüche 1 bis 6, bei dem der Katalysator ein Alkalimetallhydroxid ist.

8. Verfahren gemäß einem der Ansprüche 1 bis 7, bei dem die Reaktion unter Verwendung eines Reaktors vom Kneter-Typ durchgeführt wird.

## Revendications

1. Procédé de production d'un dérivé d'éther de cellulose comprenant
la production d'une cellulose en poudre faiblement cristalline présentant une cristallinité inférieure ou égale à 50 % en broyant grossièrement des pâtes stratiformes pour obtenir des pâtes sous forme de copeaux et le traitement des pâtes sous forme de copeaux par une extrudeuse et ensuite par un broyeur à boulets, ainsi que l'étape de réaction de la cellulose en poudre faiblement cristalline avec un composé époxy en présence d'un catalyseur.

2. Procédé selon la revendication 1, dans lequel le composé époxy est un composé choisi dans le groupe consistant en un sel d'ammonium de glycidyle et de trialkyle représenté par la formule générale suivante (1), un glycidol, un oxyde d'éthylène et un oxyde de propylène,

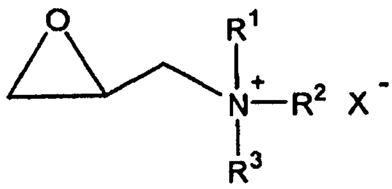

(1)

dans laquelle $R^1$ à $R^3$ peuvent être identiques ou différents et représentent chacun respectivement un groupe hydrocarbure ayant de 1 à 4 atomes de carbone ; et X représente un atome d'halogène.

3. Procédé selon la revendication 1 ou 2, dans lequel le dérivé d'éther de cellulose est un dérivé d'éther de cellulose représenté par la formule générale suivante (2), l'hydroxyéthyl cellulose ou l'hydroxypropyl cellulose,

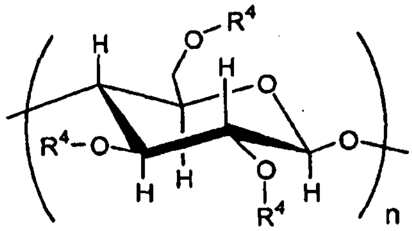

(2)

dans laquelle $R^4$ représente un atome d'hydrogène, un groupe substituant représenté par la formule générale suivante (3), ou un groupe substituant représenté par la formule générale suivante (4) ou (5), à condition que l'ensemble des groupes $R^4$ ne représentent pas en même temps des atomes d'hydrogène, et le groupe substituant de formule générale (3) et le groupe substituant de formule générale (4) ou (5) ne sont pas présents en même temps ; et n représente un nombre allant de 100 à 2 000,

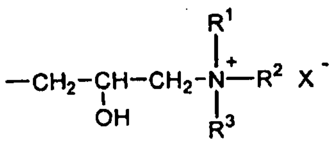 (3) , 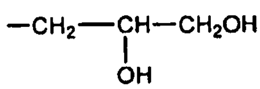 (4) , 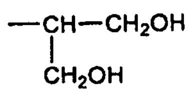 (5)

dans laquelle $R^1$ à $R^3$ et X sont tels que définis ci-dessus.

4. Procédé selon l'une quelconque des revendications 1 à 3, dans lequel la réaction entre la cellulose en poudre faiblement cristalline et le composé époxy est mise en oeuvre en présence d'une quantité catalytique du catalyseur.

5. Procédé selon l'une quelconque des revendications 1 à 4, dans lequel une teneur en eau basée sur la cellulose en poudre faiblement cristalline est inférieure ou égale à 100 % en masse.

6. Procédé selon l'une quelconque des revendications 1 à 5, dans lequel la réaction est mise en oeuvre en faisant appel à un solvant non aqueux en une proportion inférieure ou égale à 20 fois la masse de la cellulose en poudre faiblement cristalline.

7. Procédé selon l'une quelconque des revendications 1 à 6, dans lequel le catalyseur est un hydroxyde de métal alcalin.

8. Procédé selon l'une quelconque des revendications 1 à 7, dans lequel la réaction est mise en oeuvre en faisant appel à un réacteur de type malaxeur.

Fig. 1

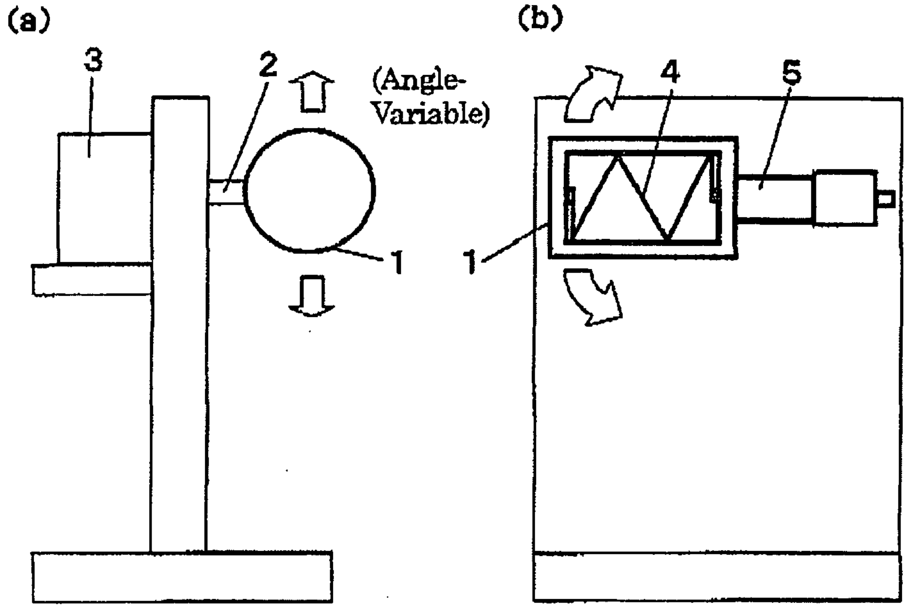


Fig. 2

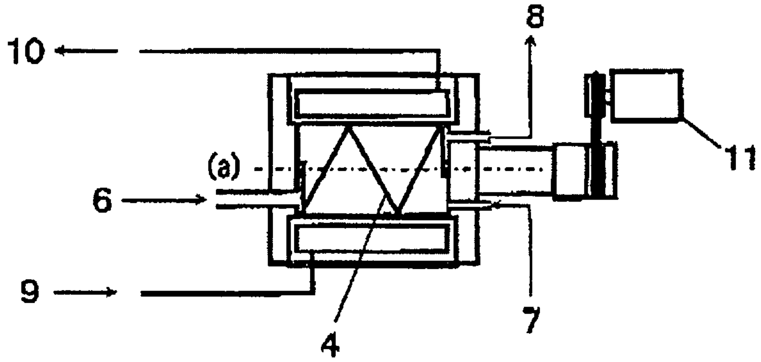

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8245701 A
- JP 6199902 A
- JP 454754 B
- JP 60009521 B
- JP 11021301 A
- JP 2000186101 A
- JP 2007238656 A
- JP 60177002 A
- US 6392035 B1
- WO 9954361 A1
- US 4477657 A
- JP 2002114801 A


### Non-patent literature cited in the description


- *Makromol. Chem.,* 1992, vol. 193 (3), 647
- Chemical Engineering Handbook. Maruzen Co., Ltd, 917-919